# EUROPEAN PATENT APPLICATION

(11) **EP 4 763 683 A1**
(43) Date of publication of application: **24.06.2026**
(21) Application number: 25217151.7
(22) Date of filing: 19.11.2025
(51) Int. Cl.: B62M 6/45, B60K 6/46, B60L 50/20, B62M 6/60, B62M 19/00

(54) **CHAINLESS PEDELEC WITH SERIAL HYBRID DRIVE SYSTEM ENABLING ONE-LEGGED DRIVING**

(30) Priority: 19.12.2024 NL 2039414
(71) Applicant: Van Raam Mobility B.V., 7051 HT Varsseveld (NL)
(72) Inventor: Zyska, Kevin, 7051 HT Varsseveld (NL)
(74) Representative: Custos IPC Coöperatie U.A.

(57) **Abstract**

A vehicle is described comprising at least two wheels (3,4) and a hybrid drive system (20) for driving at least one of the wheels. The hybrid drive system (20) comprises at least one electrical generator (6) comprising a generator axle, a pedal-crank drive (11) coupled to the generator axle, at least one electrical drive motor (7) arranged to drive the at least one of the wheels, an energy storage device (8) arranged to store electric energy generated by the electrical generator, and to supply energy to the at least one electrical drive motor. It also comprises a control system (9) comprising a generator current measurement unit to measure a generator current (I_{Gen}). The generator current is used to determine a driver input torque applied to the pedal-crank drive. Furthermore, a generator speed measurement unit is arranged to measure a generator angular speed. Also, a generator control unit is arranged to control the electrical generator depending on a target current value (I_{Gen_target}). A generator target current calculator is arranged to calculate the target current value (I_{Gen_target}). The target current value (I_{Gen_target}) is limited between two output limits being a lower output limit and an upper output limit, wherein the control system is arranged to switch at least one of the two output limits between a zero-value and a non-zero value so as to allow the electric generator to generate both driving and regenerative torque if the driver input torque (T_{Drivar}) satisfies a first condition, and to allow the electric generator to generate only regenerative torque if the driver input torque (T_{Drivar}) satisfies a second condition.

## Description

### Field of the invention

The present invention relates to a vehicle comprising a frame, at least two wheels, and a hybrid drive system for driving at least one of the wheels. The invention also relates to method of controlling such a vehicle, and to a computer program product.

### Background art

There are people who, due to various health restrictions, are no longer able to use both legs to drive a classic pedal drive on a bicycle (or similar). If only one leg is strong enough, it would not be possible to drive the vehicle, as the pedals would be stuck in the remaining half-oscillation in a classic mechanical drive train.

Modern pedal-crank-driven vehicles that are equipped with a serial hybrid drive system provide for a wide variety of driving behaviours. However, until now, there is no good solution in the field of electrically driven vehicles that focusses on people with only one healthy leg.

### Summary of the invention

The aim of the present invention is to provide a pedal-crank-driven vehicle that is equipped with a serial hybrid drive system which offers an improved driving experience for drivers having only one healthy leg.

According to a first aspect of the present invention, there is provided a vehicle, such as a bicycle or tricycle, comprising at least two wheels and a hybrid drive system for driving at least one of the wheels, wherein the hybrid drive system comprises:
- at least one electrical generator comprising a generator axle;
- a pedal-crank drive coupled to the generator axle;
- at least one electrical drive motor arranged to drive the at least one of the wheels;
- an energy storage device arranged to store electric energy generated by the at least one electrical generator, and to supply energy to the at least one electrical drive motor, and
- a control system.

The control system comprises a generator current measurement unit arranged to measure a generator current of the at least one generator, which generator current is used to determine a driver input torque applied to the pedal-crank drive by a driver. The control system also comprises a generator speed measurement unit arranged to measure a generator angular speed and/or a generator angle. The control system also comprises a generator control unit arranged to control the at least one electrical generator depending on a target current value for the at least one electrical generator. The control system further comprises a generator target current calculator arranged to calculate the target current value, wherein the target current value is limited between two output limits being a lower output limit and an upper output limit, and wherein the control system is arranged to switch at least one of the two output limits between a zero-value and a non-zero value so as to allow the at least one electric generator to generate both driving and regenerative torque if the driver input torque satisfies a first condition, and to allow the at least one electric generator to generate only regenerative torque if the driver input torque satisfies a second condition.

By switching at least one of the output limits, such as the upper output limit, from zero to a non-zero value, the system enables those values for the target current value for the generator, that cause the generator to exert motoring torques on the crank mechanism and therefor drive it actively. This feature can be used in case, a person with one leg, or with only one healthy leg is driving the vehicle. The output limit is switched back to zero under certain conditions, so as to avoid that the pedals keep rotating, even when the user want to stop pedalling, like in case of cruising.

In an embodiment, the control system is arranged to switch the upper output limit from zero to a positive value if the driver input torque satisfies the first condition, and to switch the upper output limit from the positive value back to zero if the driver input torque satisfies the second condition.

In an embodiment, the first condition is satisfied if the driver input crank torque exceeds an upper torque threshold.

In an embodiment, the second condition is satisfied by the input driver torque if it drops below a lower torque threshold and stays below the lower torque threshold for at least a predefined time duration. As such, the switching of the output limits according to this embodiment, is time based in this case.

The predefined time duration may be a predefined percentage of the time that one pedal-crank drive revolution would take at a measured generator angular speed. The predefined percentage may lie in a range of 50% - 80%, and preferably in a range of 55% - 65%, and more preferably equal to 60%. The percentages are determined based on the functional requirement that, in order to enable one-legged operation of the drive system, a torque contribution is expected from each leg during its respective active half of one mechanical revolution of the pedal-crank drive. Since the inactive phase of one leg corresponds to approximately 50% of a full crank drive revolution, the system monitors for torque input from the opposite crank side during this interval. If no torque contribution is detected within this expected time frame, it can be inferred that the corresponding leg is absent or non-functional, thereby requiring compensation. By selecting a threshold value slightly higher than 50%, additional tolerance is provided to ensure reliable detection and to minimize the risk of false classification.

In an embodiment, the second condition is satisfied by the input driver torque if it drops below a lower torque threshold and stays below the lower torque threshold for a predefined number of angular degrees of the pedal-crank drive (i.e. the pedal drive angle). It is noted that the pedal drive angle is directly linked to the generator angle, since the mechanical transmission ratio (if any) creates a direct proportionality between the two angles. The generator angle can be measured by generator speed module arranged on the electrical generator. The measured generator angle can then be converted into a (non-absolute) pedal drive angle.

In this embodiment the switching of the output limits is angle based. It is noted that the time based condition, mentioned above, bases on the assumption that the speed is not varying much since the condition is met. The angle based condition on the other hand is not time dependent and will therefore also work with dynamically changing speeds. At the same time, the time based condition is there to prevent the case that for example the crank suddenly gets mechanically forced to stop rotating, because then the angle based condition would never trigger. So, in total they may be used both, and in that case, they complement each other to make sure that the output limits are switched when needed.

The predefined number of angular degrees may lie in a range of 180° - 270°, and is preferably equal to 240°. For one-legged operation, the system continuously evaluates whether mechanical input is provided by both legs or by only one. In the case of a driver possessing or utilizing only a single leg, torque can be applied during approximately one half of the pedal crank's rotational cycle, while no torque contribution occurs during the remaining half. Accordingly, a "waiting angle" of at least 180° is defined to monitor the second half of the revolution for torque input. By selecting a value slightly greater than 180°, additional tolerance is introduced, providing sufficient margin to ensure reliable detection and to prevent erroneous interpretation.

In an embodiment, the control system is arranged to switch the at least one of the output limits only after the first condition and/or second condition is met for at least a waiting time, the waiting time having a value in a range of 1 ms - 1000 ms, and preferably in a range of 1 ms - 100 ms. These waiting times are advantageously used to ensure that the measured change is not just a brief outlier.

In an embodiment, the generator target current calculator comprises a PI(D) controller arranged to calculate the target current value, wherein the PI(D) controller is arranged to switch the at least one of the output limits. The PI(D) controller may be a PI controller, or a PID controller. In this case, the output limits are virtual limits that are applied to the PI-controller output values. The limiting of the output values to the switched limit values can be mathematically applied within the PI(D) controller calculations. So, in this embodiment, the switched output limit values are in fact a PI(D) controller setting/parameter that is changed.

In an embodiment, the generator target current calculator is arranged to receive instructions from a user interface which instructions allow the switching of the at least one of the output limits. This will allow the driver to activate/deactivate the one-legged driving via the user interface of the vehicle.

In an embodiment, the control system is arranged to set the at least one of the output limits to a value which is a predefined percentage of the maximum current of the generator, for example to 10% of the maximum current of the generator. In this case only 10% of the torque can be used to drive the driver's legs. This means that the maximum force on the rider's legs is limited very precisely with known characteristics of the machine, which in turn leads to greatly increased safety. It is noted that this feature is applicable and relevant only with respect to the output limit value that governs the resulting motoring torque, and not the regenerative torque. The limitation, for example to 10%, serves to ensure that excessive force is not applied to the driver's leg while the system actively provides motoring torque through the generator. In contrast, applying a similar limitation to the regenerative torque would be undesirable, as it would negatively affect the dynamic behaviour and overall performance of the system.

In an embodiment, the control system comprises a motor speed measurement unit for measuring a motor speed of the at least one electrical drive motor, the control system being arranged to control a speed of the at least one electric generator wherein a target speed value for the generator depends on the motor speed.

As mentioned above, the vehicle may be a cycle, such as a bicycle or tricycle. The vehicle may comprise one or more seats, such as two seats arranged next to each other. In that case, the vehicle may comprise two generators, one of which is arranged to deliver the driving torques if the described conditions are met.

According to a further aspect, there is provided a method of controlling a vehicle according to any of the preceding claims, wherein the method comprises:
- measuring a generator current of the at least one generator, which generator current is used to determine a driver input torque applied to the pedal-crank drive by a driver;
- measuring a generator angular speed and/or a generator angle;
- calculating a target current value for the at least one electrical generator;
- limiting the target current value between two output limits being a lower output limit and an upper output limit;
- controlling the at least one electrical generator depending on the target current value
- switching at least one of the two output limits between a zero-value and a non-zero value so as to allow the at least one electric generator to generate both driving and regenerative torque if the driver input torque satisfies a first condition, and to allow the at least one electric generator to generate only regenerative torque if the driver input torque satisfies a second condition.

According to yet a further aspect of the invention, there is provided a computer program product comprising instructions configured to, when loaded on a control system of a vehicle as described above, perform the method of as described above.

### Brief description of the drawings

These and other aspects of the invention are apparent from and will be elucidated with reference to the embodiments described hereinafter. In the drawings,
Figure 1 schematically shows a vehicle according to an embodiment of the invention;
Figure 2 schematically shows the hybrid drive system of the vehicle of Figure 1 according to an embodiment;
Figure 3 shows a graph of a typical torque curve generated by a driver with two healthy legs when actuating the pedal-crank drive on the pedal crankshaft;
Figures 4A, 4B and 4C shows a vehicle according to an embodiment with the pedals in three orientations;
Figure 5 shows a flow chart of the individual calculation steps and activation/deactivation conditions in the one-legged driving mode with a vehicle according to an embodiment;
Figure 6 schematically shows the effect of an angle-based switch-off condition of one-legged driving;
Figure 7 schematically shows an example of the results of a time-based switching off conditions;
Figure 8 shows a flow diagram of a method of controlling a vehicle as described above according to an embodiment.

It should be noted that items which have the same reference numbers in different Figures, have the same structural features and the same functions, or are the same signals. Where the function and/or structure of such an item has been explained, there is no necessity for repeated explanation thereof in the detailed description.

### Detailed description of embodiments

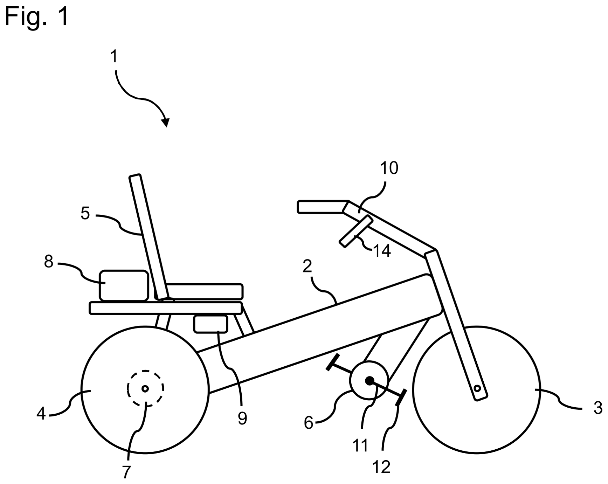

Figure 1 schematically shows a vehicle 1 according to an embodiment of the invention. In this embodiment, the vehicle 1 is a tricycle and comprises a frame 2, one front wheel 3 and two rear wheels 4 (only one of which is visible). The vehicle 1 also comprises a seat 5 for the user, also referred to as the driver or rider. The vehicle 1 comprises a serial hybrid drive system comprising at least one electric generator 6, at least one electric drive motor 7 and an energy storage device 8 for storing electric energy. The drive system of the vehicle 1 also comprises a control system 9 for controlling the electric generator 6 and the drive motor 7 as will be explained in more detail below. Figure 1 also shows handlebars 10 coupled to the front wheel 3 of the vehicle.

In this embodiment, the vehicle also comprises two pedals 12 that are coupled to the generator 6 via a pedal-crank drive 11. It is noted the pedal-crank drive 11 can be integrated with the axle of the generator 6. Alternatively, a rotation the pedals is converted to a rotation of the generator via a gear system (not shown) as will be clear to the skilled person. Once the user pushes the pedals 12 around, the generator 6 is rotated and will produce an electric current, creating energy which is stored in the energy storage device 8. The motor 7 can extract the energy from the energy storage device 8. The hybrid drive system of the vehicle 1 does not need chains, which means that this tricycle can be a chainless cycle. Figure 1 also shows a human machine interface device 14, which may be a small display, such as a touch screen mounted to the handlebar 10. The human machine interface (hmi) device 14 may be arranged to receive instructions from the user and communicate with the control system 9 by means of interchanging information, wireless, or through wires.

In an alternative embodiment, the vehicle 1 comprises two seats, and two generators, each of which are rotated by separate persons. Vehicles for more than two persons and thus more than two generators are conceivable. Also, the number of drive motors may be more than one depending on the drive system configuration.

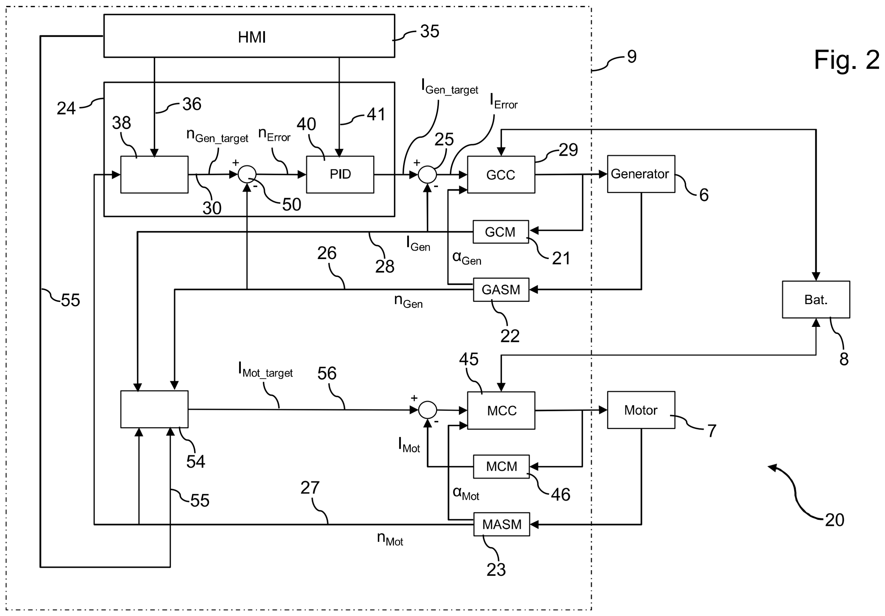

Figure 2 schematically shows the hybrid drive system 20 of the vehicle 1 of Figure 1 according to an embodiment of the invention. The drive system 20 comprises one electric generator 6 and one drive motor 7 arranged to drive the at least one of the wheels such as the rear wheels 4 shown in Figure 1. Figure 2 also shows the energy storage device 8 arranged to store electric energy generated by the electric generator 6, and the control system 9.

In this embodiment, the control system 9 comprises a generator current measurement (GCM) unit 21 for measuring a current of the generator 6. The control system 9 also comprises a generator speed measurement unit 22 for measuring an actual generator speed n_{Gen}. The control system 9 also comprises a motor speed measurement unit 23 for measuring an angular speed of a rotor of the motor 7. Both speed measurement units 22, 23 may also provide angle information, and are therefore also referred to as angle and speed measurement units GASM 22, and MASM 23 respectively.

The control system 9 is arranged to control a speed of the electric generator 6 wherein a target speed value n_{Gen_target} for the generator 6 depends on the motor speed n_{Mot}. Furthermore, a target current value I_{Mot_target} for the motor 7 depends on a dynamic power input produced by a driver when rotating the pedal-crank drive. The power input of the driver can be determined using the outputs of the generator current measurement unit 21 and of the generator speed measurement unit 22. The output of generator current measurement unit 21 is directly related to the torque T on the rotor of the generator 6, which torque value can be multiplied by the angular speed ω provided by the generator speed measurement unit 22, in order to come to the power P = T x ω.

In the embodiment of Figure 2, the control system 9 further comprises a generator target current calculator 24 arranged to calculate a target current value I_{Gen_target} for the generator using the generator speed, see arrow 26, and the motor speed n_{Mot}, see arrow 27. A subtractor 25 is arranged to compute a difference between the measured generator current I_{Gen} and the target current value I_{Gen_target} so as to obtain a first error value I_{Error}. Computing may be done by subtracting the measured generator current from the target current value. The control system 9 further comprises a generator current control unit 29 arranged to control a current of the generator 6 using the first error value I_{Error}.

The control system also comprises a target current calculator 24. This target current calculator 24 calculates the target current value I_{Gen_target} using the difference between a generator target speed n_{Gen_target}, see arrow 30, and an actual generator speed n_{Gen}, see arrow 26. The target current calculator 24 may comprise a subtractor 50 arranged to subtract the measured generator speed n_{Gen} from the target speed value n_{Gen_target} so as to obtain a second error value n_{Error}.

In the embodiment of Figure 2, the target speed value n_{Gen_target} for the generator 6 is depending on the measured motor speed n_{Mot}. This dependency may have all sorts of configurations. For example, the target generator speed value may be proportional to the motor speed.

The implementation of Figure 2 has several advantages. It does not matter in which position the pedal-crank drive 11 is currently located and with how much torque the driver is currently driving it; if the generator speed exceeds the setpoint n_{Gen_target}, the value of n_{Error} will become negative and thus always creating a dynamic braking torque that reacts to it. With well-designed parameter settings, the drive system 20 can be set so rigidly that an increase in speed is no longer noticeable, as it is in the range <<1rpm.

Another advantage is that with the described control system 9, the generator 6 automatically sets a suitable braking torque. This is (offset with any gear ratio and torque losses on the mechanical path) directly proportional to the driver torque. Consequently, the driver torque in this drive system 20 can be determined completely sensorless with this control implementation. In this case, the electric machine in the generator 6 is the sensor, provided that the current-to-torque characteristics of the machine are known.

Since the generator 6 is speed-controlled, the dynamic torque generated by the driver via the pedal-crank drive is kept quasi-statically in equilibrium with sufficiently fast and rigid speed control. In this way, a very natural-feeling resistance torque can be generated at the pedals for the driver, although its mechanical influence on the system cannot be predicted. At the same time, no torque sensors are required as the control can be implemented using the speed signal alone. The resulting dynamic target current value I_{Gen_target} is also directly proportional to the applied driver torque (minus any mechanical and electrical losses). This means that the proposed control system can not only generate a natural feeling of resistance, similar to a mechanical system with a chain/belt, but at the same time the driver's torque can also be measured completely without an additional sensor and solely by the generator control.

In the embodiment of Figure 2, the drive system 20 of the vehicle 1 also comprises a user interface 35 for receiving speed related input hmi_{Speed} by a user, wherein the target current calculator 24 calculates the target current value I_{Gen_target} using the received speed related input hmi_{Speed}, see arrow 36. By providing the speed related input, the driver can (but does not have to) directly influence the set speeds of the generator 6 and thus the system behaviour. For example, the generator 6 can simulate various mechanical gearshift systems and transmissions known from the state of the art. If, for example, the speed of the motor 7 (and thus the output of the vehicle) is calculated with a constant factor into the generator target speed n_{Gen_target}, the system will behave like a mechanical transmission between the driver's input on the pedals and the output on the wheel. The speed related input hmi_{Speed} could also be used by the driver to manually shift gears, for example, each of which has different factors and thus transmission ratios. This would correspond to a classic, manually shifted mechanical gearbox, whereby the number of gears and selected transmission ratios can be chosen as required. At the same time, however, the speed related input hmi_{Speed} can also be used to request that these imitated mechanical gearshift steps are automatically shifted by the system software depending on the operating point (e.g. depending on speed and load). It is also possible to omit constant proportionality ratios and instead specify a constant desired speed on the pedal-crank drive via hmi_{Speed}. Taking into account the drive-off process, e.g. with an i_{Liftoff} drive-off ratio, the speed control can then keep the crank speed constant, even if the vehicle speed changes. This corresponds to the mode of operation of a continuously variable transmission, also known as a CVT. The target speed in CVT mode does not necessarily have to be constant and can also change depending on the load and vehicle speed, for example. The modes described for selecting the target speed n_{Gen_target} are merely examples and can be combined and extended as required, whereby the driver can generally exert a direct influence on the desired system behaviour via the speed related input hmi_{Speed}.

In this embodiment, the generator target current calculator 24 further comprises a PI(D) controller 40. The PI(D) controller 40 may be a PI controller or a PID controller, i.e. also adding a differential component to the calculation for the output signal. In an embodiment, the output signal of the PI(D) controller 40 is limited to certain values, such as outputting only zero and negative values. This will result in in a system wherein the user will experience only counter torque during driving. The driver experience will then be quite similar to classical vehicles having drivetrains with chains. The limiting of the PI(D) controller output may be modifiable by a user, e.g. entering user input for specific driving modes, which are then input for the limiter inside the PI(D) controller, see arrow 41.

In the embodiment of Figure 2, the control system 9 further comprises a motor current control unit 45 arranged to control a current to the motor 7, and a motor current measurement unit 46 for measuring the current through the motor 7.

In an embodiment, the hybrid drive system 20 to be controlled comprises one or more generators and one or more drive motors. The generators and the motors are so-called electrical machines which, if necessary, are used together with a transmission system (mechanical gearbox or similar). An electric machine can always work both as a motor and as a generator, depending on the direction in which the power flows. In Figure 2, the designation has been deliberately chosen to distinguish between the subsystems. In this embodiment, the generator 6 may be directly connected to a classic crank drive, while the motor 7 acts on the vehicle's output and can therefore accelerate it. In the embodiment of Figure 2, the generator 6 and the motor 7 are AC machines. Both the generator current control unit 29, and motor current control unit 45 may comprise suitable DC/AC converters. It is noted that alternatively, one or more of the generator(s) and motor(s) operate on DC.

The vehicle 1 enables a classic driving experience for the driver acting on the pedal-crank drive in the context of the overall vehicle with this mechanical structure of a serial hybrid drivetrain, as described above, as the driver knows it from riding a regular bicycle.

In the embodiment of Figure 2, the generator 6 is speed-controlled, whereas the motor 7 is torque-controlled. Torque generation in an electrical machine is achieved via a respective current control (see generator current control unit 29, and motor current control unit 45), since the torques in an electrical machine are proportional to the applied current. This current control of the generator 6 is enabled using the generator current measurement unit 21 as well as a speed measurement unit 22 which is arranged to provide both an angle and a generator angular speed (α_{Gen} and n_{Gen}). The current control of the drive motor 7 is enabled using outputs of the motor current measurement unit 46 as well as of a speed measurement unit 23 as feedback of the control loop.

The generator 6 in Figure 2 is speed-controlled by way of arranging a further control loop for the generator 6 in order to control the speed. A dynamic target current I_{Gen_target} for current control is automatically calculated from the difference between a target speed n_{Gen_target}, see arrow 30, and a measured actual speed n_{Gen}, see arrow 26. This actual speed n_{Gen} may be calculated from the measured angle received from the GASM measurement unit 22.

**It** is noted that the two subsystems of generator 6 and motor 7 are controlled in harmony with each other and in the context of the overall system, so that the desired system behaviour and driving experience is generated. The target speed n_{Gen_target} for the generator 6 is calculated in a dedicated sub-function referred to as the generator target speed calculator 38. This calculator receives both the currently measured speed n_{Mot} (see arrow 27) of the motor as input for the calculations, as well as any additional hmi (human machine interface) inputs hmi_{Speed} from the driver, see arrow 36, which the driver can use to actively influence the calculations, e.g. to define desired speeds.

For the generator target speed calculator 38, there are various options for calculating a suitable target speed for the generator 6 from the inputs mentioned. The simplest, and at the same time closest to a classic mechanical bicycle drivetrain with a manual gearbox, works as follows. A virtual gearbox is parameterized, which has any number of gears with associated fixed gear ratios (i_{Transmission} = n_{Gen}/n_{Mot}). The speed n_{Mot} measured in speed measurement unit 23, is then multiplied by the speed from the currently preselected virtual gear and its transmission ratio i_{Transmission} to obtain the generator target speed n_{Gen_target}. For example, let's assume that 'Gear 1' with i_{Transmission} = 1.5 is active. If n_{Mot} = 0rpm then n_{Gen_target} = 1.5*n_{Mot} = 0rpm. If n_{Mot} = 20rpm then n_{Gen_target} = 1.5*n_{Mot} = 30rpm. In this way, the speed of the generator 6 is calculated based on the current motor speed (which in turn is directly proportional to the vehicle speed), which in turn creates the perceptible relationship between the motor and generator for the driver. The active gear from the virtual gearbox can be selected manually by the driver via the hmi_{Speed} input, see arrow 36, or automatically by using suitable software. An algorithm can be stored via a shift point diagram, for example, which independently selects and executes appropriate shift points depending on external variables (such as vehicle speed, output torque or similar). If a gear is changed, the change in the target speed is limited by limiting the dynamic rate of change, e.g. based on time, in order to give the driver a smooth shift feeling. This can be set to be more dynamic/sporty or softer/more comfortable, depending on the driver's preference.

Alternatively, the speed of the generator in relation to the motor speed can also be set dynamically rather than in fixed proportionality steps (= constant, virtual gear ratio). A simple example of this is the programming of a CVT transmission with continuously variable transmission ratios. The driver can, for example, set a desired cadence on the pedals via hmi_{Speed}, which is always kept constant. This gives the driver the feeling that the transmission ratio is being varied continuously and without step changes, so that the driver can work at a constant generator speed over the entire speed range of the vehicle. Only the start-up process must be considered separately from the standstill, as the generator must first be brought up to the target speed. This can be done, for example, by defining a starting ratio i_{Liftoff}. The calculated generator target speed value n_{Gen_target} is then used as the basis for speed control via the PI(D) controller 40. This fulfils several essential tasks: First of all, an adequately fast and well-parameterized control enables a dynamic generation of a braking torque at the generator for the driver, so that he has the feeling of driving a real mechanical load. Due to the crank kinematics, the driver's torque is by no means constant, but rather roughly simplified sinusoidal with fully variable amplitude and speed-dependent frequency, whereby the torque oscillation has twice the frequency of the crank speed (left and right leg each generate a peak in the torque curve). In order to keep the speed constant in accordance with the target speed, for example, the speed controller must react with an equally dynamic, proportional torque. If there is a torque difference between the driver input and the generator braking torque, this would result in acceleration and the speed would change. In a perfect controller, the generator would therefore always apply exactly the driver's torque at the same time in a negative way in order to prevent a change in speed compared to the setpoint. However, as the control system only reacts and does not predict future driver behaviour, this process cannot be implemented perfectly in reality. The periodic change in the driver's torque will therefore inevitably result in a small speed deviation (n_{Error} = n_{Gen_target} - n_{Gen}), see also arrow 50. This in turn serves as an error variable in the control loop and provides the PI(D) controller 40 with the basis for determining the dynamic generator torque. Example: The target speed is 0rpm. The driver applies a torque via the pedal-crank drive, which leads to an increase in speed without resistance. This increase is proportional to the torque difference between the driver input and the generator braking torque. The greater the control error n_{Error}, the greater the calculated torque of the PI(D) controller 40 in the form of the setpoint current. If the driver torque decreases again, the speed will also decrease again. Accordingly, the controller's reaction to this deviation also decreases and the braking torque adapts dynamically. If the speed falls below the set value, the controller output becomes 0 or even changes sign. In this way, the control system 9 reacts fully dynamically to the fluctuating torque input from the driver. If the controller parameters are designed adequately and the control loop calculation is carried out at a sufficient speed, the resulting speed difference can be kept so small (e.g. <<1rpm on the pedal-crank drive) that the driver cannot feel any deviation from the target speed. In this way, the pedal can even be held quasi-statically at a standstill and prevented from rotating by the generator torque.

An advantage of this implementation is that the speed control and the resulting target currents for the generator (which in turn can be converted into the generator torque) can also be used to automatically determine the torque of the pedal-crank drive and therefore the driver. This is because, as described above, these must be the same in a state of equilibrium. Therefore, the generator torque, which reacts automatically to the driver's dynamic input torque via the control loop, can be converted directly into the driver's torque. The use of an expensive torque sensor, as used in many e-bike drive systems today, is therefore no longer necessary. And the current sensors for detecting I_{Gen} are installed anyway to control the electric machine and are always present.

In an embodiment of the invention, the output of the PI(D) speed controller is provided with an output limitation (e.g. implemented via a clamping algorithm). This has the following purpose: If the output is not limited, for example, the controller is allowed to generate both braking and driving torques at an existing setpoint speed. However, driving torques cause the generator to work as a motor and actively set the pedals in motion. Example of the effect: The vehicle is pushed externally or rolls down a hill or similar, so that the speed is > 0 km/h. This would in turn lead to a generator setpoint speed >0 rpm. If the driver is not active, the generator will still set the pedal-crank drive in motion, as this is dependent on the vehicle speed via the implemented control system. The resulting system behaviour corresponds, for example, to a chain drive that has no freewheel and can therefore drive the pedals. This is possible, but undesirable for driving comfort, as the driver can then never stop pedalling when the vehicle is coasting. However, if the output of the PI(D) controller is limited to braking currents only (e.g. limiting all positive/driving currents to 0, so that only 0 or negative currents may be output), for example, no generator torque is generated if the pedal-crank drive speed falls below the setpoint speed. This has the same physical effect as the use of a mechanical freewheel in the case described above. This guarantees that the driver is only braked at the generator, but not accelerated, and at the same time can rotate the crank drive backwards, for example, without experiencing resistance. Similarly, the pedal-crank drive is not actively set in motion via the generator when the vehicle is coasting.

It is noted that the dynamic counter/braking torque, which gives the driver the feeling of resistance, is determined and generated via the above-described speed control of the generator 6. This can now be converted into a system reaction so that the driver also has the correct feeling of influencing the output of the system. A motor target current calculator 54 is arranged for this purpose, see also Figure 2. The motor target current calculator 54 is arranged to determine a motor target current I_{Mot_target}, see arrow 56, which is input for the motor current control unit 45, after subtracting the measured motor current measured by the motor current measurement unit 46. In the embodiment of Figure 2, the motor target current calculator 54 is arranged to receive the generator current I_{Gen} from the generator current measurement unit 21, and to receive the generator speed n_{Gen} from the generator speed measurement unit 22. The motor target current calculator 54 is also arranged to receive the motor speed n_{Mot} from the motor speed measurement unit 23, and to receive an assistance level related input hmi_{Torque} from a user via the user interface 35.

The motor target current calculator 54 calculates the driver torque on the basis of the generator current I_{Gen}, and then calculates the driver's power by multiplying the generator speed by the calculated driver torque. Next, the motor target current calculator 54 calculates the motor power that the drive motor should generate based on the driver's power and the assistance level. The motor power is then divided by the measured motor speed to determine the required torque of the motor, which is then converted into the required current I_{Mot_target} using the known machine characteristics of the motor 7.

In other words, the input variables of the motor target current calculator 54 are the generator current I_{Gen}, the generator speed n_{Gen} and any external driver influence variables like the assistance level related input hmi_{Torque}, see arrow 55. The driver torque is calculated on the basis of the generator current. Together with the generator speed, the driver's power (power = speed * torque) is therefore also known. Based on these known driver input variables, the power that the drive motor 7 should generate at the output is then calculated. It is noted that there are various ways of establishing the connection. The simplest is to scale the driver input with constant proportionality. In that case, the driver's power is multiplied by a factor, which in turn can be selected manually by the driver, e.g. in predefined steps. These factors could be, for example: 1, 2, 3 and 4. Here, 1 corresponds to the direct transfer of driver power to the output (P_{mot_target} = P_{Gen} * factor), while values greater than 1 mean an increase in driver power, i.e. boosting. The energy required for this is taken from the energy generated at the generator 7, but if the power is increased, additional energy must also be taken from the energy storage device 8 (i.e. battery 8). So, the mechanical and electrical losses in the drivetrain can also be taken from the battery 8 to give the driver the feeling that the efficiency of the power transmission from the pedal-crank drive to the output is 100%. It would also be possible to set the output power lower than the driver's power (e.g. by a factor of 0.5). This would then lead to the energy storage device 8 being recharged. It would also be possible to brake by recuperation with the drive motor 7 in order to relieve the mechanical braking system and recharge the energy storage device 8 to increase system efficiency. It is noted that the assistance level can be selected not only manually by the driver (as previously described with the target speed calculation), but also, for example, by algorithms that adapt to external boundary conditions and set the support fully dynamically. Such external conditions may include, for example, gradients on the road, weather conditions, the driver's fitness level, etcetera.

As already mentioned above, the calculated target power of the drive motor 7 is converted into a target torque via the speed measured in motor speed measurement unit 23, which in turn relates to the target motor current I_{Mot_target}. When the vehicle 1 is stationary, this power-based calculation must still be modified, as the speed in this case is 0 rpm and it therefore does not make sense to divide the target power by 0 rpm. In this case, for example, the determined driver torque can be converted directly into an output torque, regardless of the speed.

The value I_{Mot_target} is thus determined in the manner described above, which then generates the drive torque in the motor current control loop. This in turn causes the vehicle 1 to accelerate (provided that the driving resistance from the gradient etc. is not too great). The acceleration of the vehicle 1 leads to a change in its speed, which in turn is used as an input variable in the calculation of the target speed for the speed control of the generator 6. This closes the overall control loop of the system between the generator 6 and motor 7, so that the driver experiences a natural driving experience in which he can directly influence the vehicle's output via the generator, while the generator generates a highly dynamic braking torque due to the speed control, which always matches the current operating point.

In another embodiment, the motor target current calculator 54 only receives the generator current (I_{Gen}), see arrow 28, and optionally the assistance level related input hmi_{Torque}, see arrow 55. The calculator 54 uses the value of I_{Gen} to calculate the target current for the motor i.e. I_{Mot_target}. This can be done for example by multiplying the generator current with a factor K so as to determine the motor target current (I_{Mot_target}), e.g. I_{Mot_target} = K * I_{Gen}. K could be equal to hmi_{Torque}, and/or could be a number ranging from 1 to 5 depending on the vehicle properties and dynamics.

As mentioned above, the generator target current calculator 24 is arranged to calculate the target current value I_{Gen_target}. It is noted that the target current value I_{Gen_target} is limited between a lower output limit and an upper output limit, wherein the control system 9 is arranged to switch the upper output limit of the target current value from zero to a positive value if a first condition is met, and to switch from the positive value back to zero if a second condition is met.

By switching e.g. the upper output limit of the target current value, and keeping the lower limit unchanged, it is possible to let the generator 6 generate both driving torques and regenerative torques. It is noted that regenerative torques are also referred to a braking torques since the driver will experience a counter torque on the pedal-crank drive.

In an embodiment of the invention, the PI(D) controller comprises an output limiter arranged to limit an output of the PI(D) controller 40. The output of the PI(D) controller 40 can for example be limited so that only 0 or negative currents are output. This will result in a system behaviour wherein the user will experience only counter torque during driving. The driver experience will then be quite similar to classical vehicles having drivetrains with chains and freewheels.

In a specific embodiment, the output of the PI(D) controller 40 has a modifiable output limitation to switch at least one of the output limits from non-zero-values to zero and back. The output limiter of the PI(D) controller 40 during may be for example arranged to switch the upper output limit from zero to a positive value. This provides for a vehicle that can be operated by a user having only one leg, or having little strength in one of the legs.

By appropriately switching at least one of the two output limits, the generator 6 may work normally as a generator, but then pushes the missing/too weak leg by motoring to bring it back to the starting point of the half-oscillation. This switching can happen either on the basis of a fixed angular position (e.g. detected by an absolute encoder), or by observing the torque curve of the good leg and deciding on this (via a speed/angle control) when motor drive is required or not.

The motor-driven half-oscillation can be implemented either with speed control (keep the previous speed constant) or angle control (continue to rotate the missing 180° based on a trajectory), using for example a classic PI(D) controller.

In an embodiment, the angular position of the pedals 12 on the generator unit 6 is measured using a sensor, e.g. Hall-sensors or encoder. Based on the position information, the electric machine in the generator 6 can be motorized in the angle range where one leg is missing or is too weak. As a result, the generator motor drives the pedal-crank drive 11 until the driver is able to operate the pedal-crank drive 11 independently again with the healthy leg.

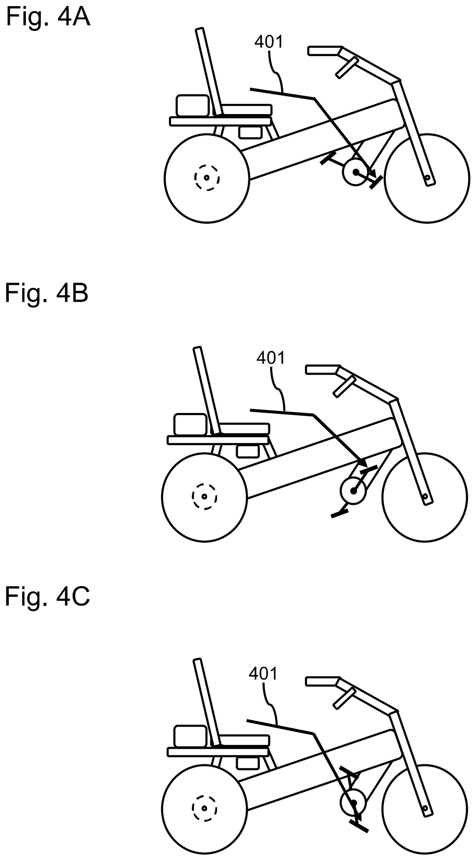

In an alternative embodiment, the torque curve of the driver is used to decide when to modify the output limiter of the PI(D) controller 40. The torque curve of the driver is always known on the basis of the currents in the electric machine (of the generator). To detect the angular position of the pedals 12 without an absolute sensor, the torque curve may be extracted from the generator current and then the peak values may be determined. In the vehicle shown in Figure 1, the peak values correspond to an approximately easily determinable pedal position, which essentially results from the seating position (see also Figure 4A-4C). By evaluating the torque curve several times, this angular position may then be calibrated over the driving time and thus made more precise. Using the peak value(s), the angular position of the rotor shaft can then be compared with the then known angular position of the pedals 12. And ultimately, this information can then be used together with the speed and torque measurement value of the control system 9 to turn the pedals 12 by 180° in the half-oscillation without an active leg.

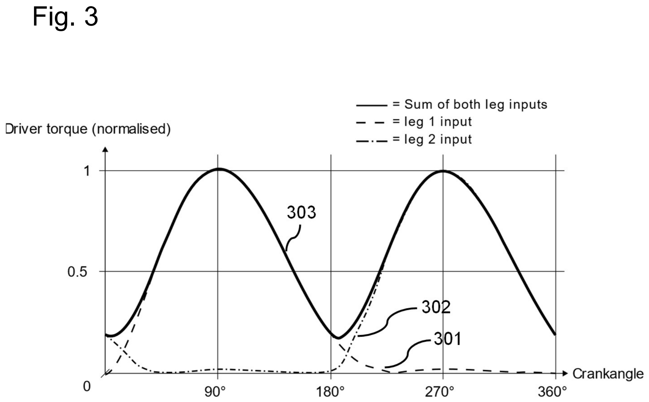

The above embodiments are further elaborated using Figures 3 - 7. Figure 3 shows a graph of a typical torque curve generated by a driver with two healthy legs when actuating the pedal-crank drive on the pedal crankshaft. The torque inputs of the individual legs (see line 301 and line 302) and the resulting overall torque curve (see line 303) are shown, standardized in torque magnitude, and plotted over one crank revolution, with the crank angle varying from 0 degrees to 360 degrees. From Figure 3, it can be seen that an oscillation with double the frequency results in the torque curve per crank revolution. However, if only one leg is used because the driver only has one leg for example, the torque curve would reach or come very close to the value 0 Nm at a certain point in time. Figures 4A-4C schematically show three pedal positions of the pedals of the vehicle 1 to explain why this is the case. Because of the static position of the upper body of the driver, sitting on the seat of the vehicle 1, the force on the pedals is always applied through the legs from an approximately constant initial direction, see also arrow 401 in Figure 4A. As a result, depending on the pedal position, the torque generation lever arm fluctuates between a maximum value (e.g. position shown in Figure 4B) or a minimum value (position shown in Figure 4C), also known as dead point. At dead point, there is no lever arm between the axis of rotation of the pedal crankshaft and the force vector of the driver input, and therefore there is no torque. If two legs are used, a small torque can still be generated at this point via the other pedal. However, if there is only one leg, there is no torque. The torque curve, see e.g. line 301 in Figure 3, inevitably goes to values very close to or equal to 0 Nm. On this basis, it is possible to detect when the driver reaches dead point with the active pedal (i.e. the leg that can drive) in the course of a crank revolution and can no longer exert any torque. This point can be detected via a small torque threshold value, e.g. < 8 Nm, and used to generate driving torques where needed.

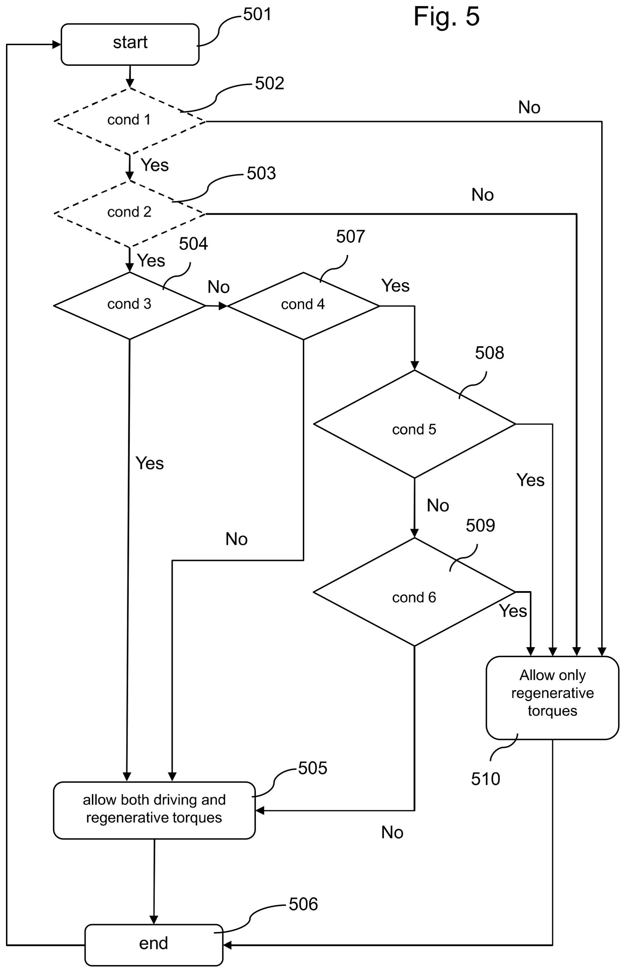

Figure 5 shows a flow chart of the individual calculation steps and activation/deactivation conditions in the one-legged driving mode with a vehicle 1 according to an embodiment of the vehicle. The steps shown in Figure 5 may be executed by the control system 9, as shown in Figure 2. The method in this embodiment starts with step 501, to start the calculation. The start of the calculation may comprise receiving instructions from another unit/device, or receiving instructions from the user. It is noted that the start of the workflow could be triggered even without a user input, as mentioned above. The user instructions could be entered using an interface to allow the driver to actively influence the drive system behaviour. But this is not mandatory in terms of the correct functioning of the algorithms but rather something to give the user more control over the system.

In an optional step 502, a condition 1 is tested. It is tested if the one-legged driving mode is active. If condition 1 is met, then a further optional step 503 follows wherein a condition 2 is tested. It is tested if the vehicle speed is larger or equal to a predetermined minimum speed value (v_{MinOneleg}). If condition 2 is met, then a next step 504 follows in which a condition 3 is tested. It is tested if the drive input torque (T_{Driver}) is larger than a torque threshold value named T_{minOnelegUpper}. If condition 3 is met, then the method proceeds with a step 505 in which the PI(D) controller output is limited so as to allow both for driving and regenerative torques at the output. Next, a step 506 follows in which the calculation ends. In fact, the flow diagram of Figure 5 shows what actions may be executed within one calculation cycle executed by the software loaded on the control system 9. For example, if the software clocks at 1 kHz, then the calculation cycle is started at the top every 1 ms. At the end of the calculation, see step 506, the calculation may be in idle mode until a new calculation step (e.g. 1 ms later) starts again from the beginning, see step 501.

If at step 504 the condition 3 is not met, meaning that drive input torque (T_{Driver}) is not larger than an upper torque threshold value T_{minOnelegUpper}, the method proceeds into a step 507 in which a condition 4 is tested. It is tested if the driver input torque (T_{Driver}) is smaller or equal to the lower threshold (T_{minOnelegLower}) for at least a safety time period of e.g. 20 ms. If condition 4 is not met, the process goes to step 505 to switch the PI(D) output limits so as to enable the active driving of the pedals to support the missing or weak leg, and then go to step 506.

However, if the condition 4 is met at step 507, then a step 508 follows. In step 508 a condition 5 is tested. It is tested if the driver input torque (T_{Driver}) is smaller or equal to the lower torque threshold value (T_{minOnelegLower}) for e.g. at least 60% of the time that one pedal revolution would take at the current cadence since the condition 4 of test step 507 was true. If the condition 5 is not met, a step 509 follows in which a condition 6 is tested. It is tested if the driver input torque (T_{Driver}) is smaller or equal to the lower threshold (T_{minOnelegLower}) for e.g. at least 240° of one mechanical pedal revolution since the condition of test step 507 was true. If the condition 6 is not met, the result of test 509 is 'No', the process goes to step 505. If the test of step 509 is 'Yes', the process goes to a step 510 in which the PI(D) controller output is limited so as to allow only regenerative torques at the output.

If the result at test step 502 was 'No', then the step 510 follows, which was already discussed. Furthermore, if the result at test step 503 is 'No', also step 510 follows. Also, if the result of test step 508 is 'Yes', step 510 is executed. After step 510, step 506 follows in which the calculation ends.

In the specific embodiment of Figure 5, the generator driving torques are limited on the one hand (for safety) and on the other hand only permitted for the next e.g. 240° mechanical crankshaft angle and also time-based (e.g. 60% of the time that a mechanical revolution of the pedal-crank drive would require at the current cadence). The purpose of testing the two conditions 5 and 6 is to ensure that only the crank angle(s) in which one leg is missing is actually supported/bypassed.

In case the driver stops applying torque to the cranks when driving in the one-legged driving mode, the control system 9 will prevent the pedals from being driven while coasting. This is due to the continuous checking of the specific conditions 4, 5 and 6 mentioned in Figure 5.

**It** is noted that position information of a rotor shaft is generally required for the control of a permanently excited synchronous machine. This can be acquired either via sensors or via software algorithms. This information can be used to determine both the angular speed of the rotor shaft and the angular speed of the pedal-crank drive via an existing mechanical gear ratio, if applicable. An angle of the pedal-crank drive can be determined by numerically integrating this speed or alternatively by directly converting the rotor shaft angle. Although this is not an absolute angle due to the gear ratio, a relative angle value is sufficient in this context. This is only used from activation of the motor operation of the generator 6 to check when this part of the control should be deactivated again. Deactivation, like activation, may be carried out by dynamically changing the output limitation of the PI(D) speed controller 40 of the generator 6. **If** the motor operation of the generator 6 is to be ended, the output limitation of the PI(D) controller 40 is set again so that only regenerative torques can be created. In this way, by actively driving the pedals, the angle range in which there is no leg/is too weak is bypassed by the motor without the need for an absolute angular position of the pedal-crank drive.

In an embodiment, a hysteresis/waiting time (e.g. 1 ms for activation of detected torque and e.g. 20 ms for deactivation due to undetected torque) is used to ensure that this is not just a brief outlier. The control system 9 may comprise a clock so as to obtain the value of time. The clock may comprise e.g. an oscillator crystal that has by physical nature a fixed oscillating frequency. This physical property is then used to synchronize a timer electronically and therefore measure passed time precisely and make time-based controlling possible. Typical waiting times lie in a range of 1 ms - 1000 ms, but preferably in a range of 1 ms - 100 ms.

**If** the condition 3 is detected and one-legged driving is enabled, the output of the PI(D) controller 40 does no longer only allow regenerative torques, but also driving torques. The generator target speed calculation described with reference to Figure 2 remains unchanged. This means that the target speed (which is dependent on the vehicle speed) at the generator 6 causes the pedal-crank drive to be actively driven by the electric machine (of the generator).

**It** is noted that the values used in the conditions, like 60% and 240°, were empirically determined values that have worked well in driving tests. It is noted that other values are conceivable, and that these values are not limiting the scope of the invention. In an embodiment, the predefined percentage is in a range of 50% - 80%, and preferably in a range of 55% - 65%. In an embodiment, the predefined number of angular degrees lies in a range of 180° - 250°.

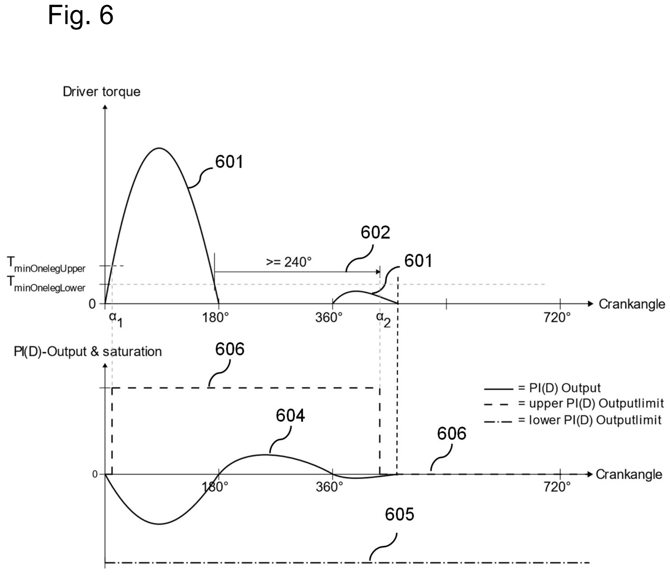

Figure 6 schematically shows the effect of an angle-based switch-off condition of one-legged driving. Figure 6 shows two related graphs. The X-axes of the three graphs in Figure 6 show the crank angle. A first graph shows the driver torque as a function of the crank angle. The second graph shows the PI(D) output as a function of the crank angle, see line 604. This graph also shows a lower PI(D) output limit, see line 605, and an upper PI(D) output limit, see line 606.

At the beginning at an angle α₁, the torque applied by the driver (Driver torque) exceeds an upper torque threshold T_{minOnelegUpper}, at which moment the upper limit of PI(D) output is switched to a positive value, see line 606, to allow driving torques. After a crank angle of around 180°, the torque input by the driver's active leg (line 601) has gone to zero, as the pedal-crank drive has reached bottom dead center for this leg. Between 180° and 360°, the PI(D) output 604 is positive, meaning that, during this time the generator 6 continues to turn at a speed according to the previous functional description by means of driving torques. So, the pedal-crank drive 11 keeps rotating even without the driver (i.e. user) applying a torque.

At a crank angle of around 360°, the driver could now apply torque again with the healthy leg. However, in this example, this only happens to a very small extent, so that the driver torque remains below a lower torque threshold T_{minOnelegLower}. A short time later, 240° of crank angle has been exceeded since first falling below the lower torque threshold T_{minOnelegLower}, see also arrow 602 indicating the 240°. As the switch-on conditions are no longer active during that time, the upper output limit of the PI(D), see line 606, is switched back to zero at this point, and only regenerative torques are permitted again. In this way the driver can let the vehicle coast with the pedals at rest.

In Figure 6 the upper torque threshold T_{minOnelegUpper}, is higher than the lower torque threshold T_{minOnelegLower}. The value for T_{minOnelegUpper} could e.g. 10% of a maximum possible torque, wherein the value for T_{minOnelegLower} could be e.g. 5% of the maximum possible torque. However, it is noted that alternatively, these two threshold values could be equal.

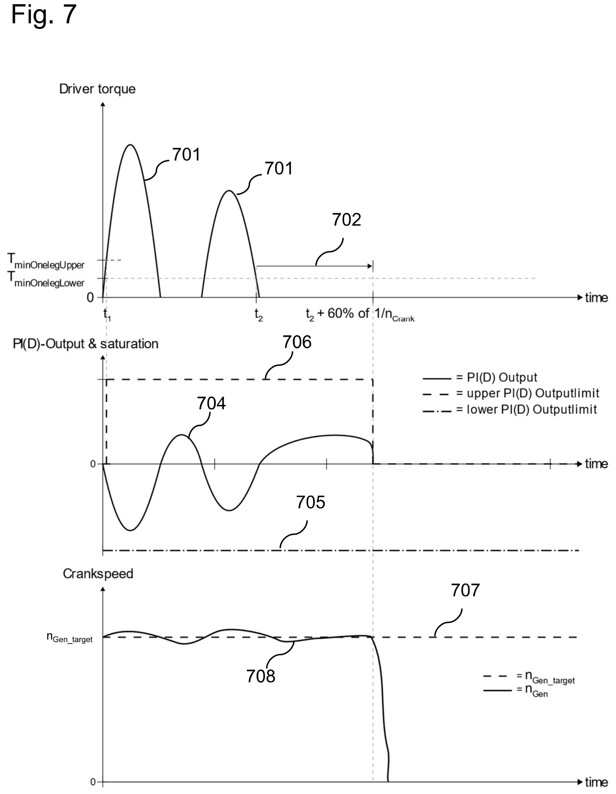

Figure 7 schematically shows an example of the results of the time-based switching off conditions. Figure 7 shows three related graphs. The X-axes of the three graphs in Figure 7 now show the elapsed time instead of the crank angle. A top graph shows the driver torque as a function of the time. The second, middle, graph shows the PI(D) output based on the overall control strategy described previously, see line 704. This graph also shows a lower PI(D) output limit, see line 705, and an upper PI(D) output limit, see line 706. The bottom graph of Figure 7 shows a generator target speed n_{Gen_target}, see line 707, and a generator speed n_{Gen} as a function of time. As can be seen from this bottom graph, at the beginning, the generator speed n_{Gen} is very close to the target speed n_{Gen_target}. Whenever the driver exerts a positive torque via the pedal-crank drive, n_{Gen} increases slightly compared to n_{Gen_target}. In this case, too, driving torques are permitted on the generator right at the start at time = t₁ when T_{minOnelegUpper} is exceeded, see line 701. These then allow the generator to continue turning in the angle range where the driver uses no leg or a weakened leg. However, after falling below T_{minOnelegLower} at time t₂, so much time passes without new torque from the driver that 60% of the time for one crank revolution at the current speed n_{Gen} is reached. This switches the output limit back to zero, see the line 706 going back to zero, so that only regenerative generator torques are permitted. From the bottom graph of Figure 7 it can also be seen that the generator speed n_{Gen} then inevitably falls to 0 rpm, as neither the driver nor the generator 9 generates a driving torque that could maintain the speed.

In an embodiment, the user is able to switch on and off the described 'one-legged driving' mode, see also step 502 in Figure 5. In this way, the vehicle 1 can be used by drivers having two sufficiently strong legs, as well as by drivers having one leg or only one sufficiently strong leg.

As described above, in the one-legged driving mode, the control system 9 may detect active pedalling by appropriate monitoring of the driver's torque and will automatically modify the output limiter of the PI(D) controller in order to allow the electric machine in the generator to deliver a driving torque. This driving torque then drives the non-existent, or too weak, second leg in order to overcome the mechanical dead point of the pedal-crank drive. As the method described here is based solely on the observation of the rider's torque and does not require any absolute position information from the crank mechanism, this method is also completely independent of which of the rider's two legs is healthy and which is not. It is irrelevant and automatically taken into account correctly by the implementation.

In an embodiment, the control system 9 is arranged so that if, after the last detected torque input by the healthy leg for more than 240° of mechanical rotation or alternatively 60% of the time that would be required for one mechanical rotation at the current cadence, there is no new torque input by the driver, the output of the PI(D) controller 40 is again limited to regenerative torques only. This means that a cruise state can also be generated with active one-legged driving.

In a specific embodiment, the control system 9 is arranged to set the at least one of the output limits to a value which is a predefined percentage of the maximum current of the generator (9), for example to 10% of the maximum current of the generator. In this way only a certain percentage, e.g. 10%, of the torque can be used to drive the legs. This means that the maximum force on the rider's legs is limited very precisely with known characteristics of the machine, which in turn leads to greatly increased safety. If, for example, the rider's leg should become entangled in the bicycle frame or similar, this torque limitation can prevent the active propulsion of the rider's legs from causing injury. For example, if the rider's leg gets caught in the frame and thus generates a greatly increased resistance torque for the generator, which is currently trying to rotate the leg via the pedal-crank drive. If this resistance is ultimately greater than the permitted driving torque, the pedal-crank drive will stop rotating and only exert the maximum permitted force on the leg. If this happens, it is easy to recognize that this is the case. This can then be used, for example, to switch to a safety mode after a few seconds, in which the system switches off automatically.

It is noted that many speeds and torques described above can also be offset against corresponding mechanical ratios, depending on the system design. For example, the generator 6 is usually a small electrical machine that can rotate very quickly but can only generate limited torque. A human being, on the other hand, can generate considerably more torque via a pedal-crank drive, but cannot rotate it as quickly. Gearboxes with constant characteristic conversion ratios may be used to adapt these different characteristics. The speeds (e.g. n_{Mot}, n_{Gen}) shown in

Figure 2, and the torques present in the drive system may therefore have to be offset against these ratios.

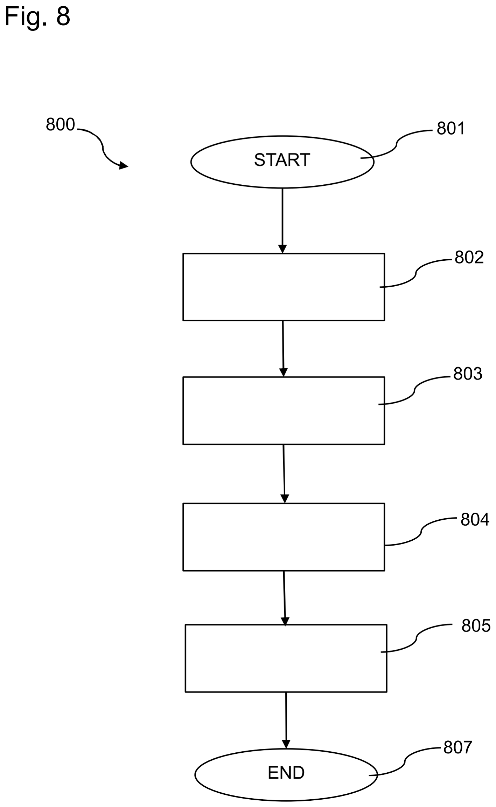

Figure 8 shows a flow diagram of a method of controlling 800 a vehicle as described above according to an embodiment. The method 800 comprises a step 802 of calculating a target current value I_{Gen_target} for the at least one electrical generator 6. The method further comprises a step of limiting the target current value I_{Gen_target} between a lower output limit and an upper output limit, see step 803. The method also comprises a step 804 of switching the upper output limit of the target current value from zero to a positive value if a first condition is met, and to switch from the positive value back to zero if a second condition is met. Finally, the method comprises a step 805 of controlling the at least one electrical generator 6 depending on the target current value I_{Gen_target}. Figure 8 also shows a start 801 and an end 805.

The control system 9 described above with reference to Figure 2, may comprise one or more processing units to load specific software for performing the method of Figure 5 and/or of Figure 8. The software may be embodied by a computer program product configured to perform the functions and steps of at least some of the units of the control system 9. Some of the units, such as the measurement units 22, 23 may conveniently be implemented in hardware, while other units, like units 20, 24, 45 and 54 may conveniently be implemented in software.

It is noted that the generator 9 works regularly as a generator but can also actively drive the pedal-crank drive and the driver's legs connected to it. In this way, it is possible in principle to bring a non-existent/too weak leg back to the starting point of the half-swing and thus enable one-legged riding with a classic pedal crank mechanism. In a regular driving mode of the generator, where the user always drives the generator via the cranks, the mechanical power always comes from the human and is then then converted to electrical power via the generator 9. This works by applying an opposing torque with the electric machine. This opposing torque, creates a regeneration of energy, because the torque is "negative" and the speed direction "positive" (positive or negative is a point of view and basically just a definition depending on the system, but important is that speed and torque direction are opposing each other, so that the power flow direction is from the users feet, over the pedals into the electric machine. In this context, the definitions of positive and negative described above are not binding. For example, the one-legged driving mode can also function as such if, for example, positive currents are always allowed to be active, but negative currents from the PI(D) controller 40 are then temporarily limited to 0, provided the direction of rotation of the pedal-crank drive is reversed. Ultimately, the definition of positive and negative depends on the direction of rotation of the crank mechanism. The power flow direction is important, i.e. whether the generator unit operates as a motor or as a generator. The processes described and the diagrams shown could therefore also easily be provided and understood with inverted signs.

In the one-legged driving mode, if the PI(D) output is set to enable driving torques (i.e. torques that accelerate the pedals in the already existing speed direction), there is no energy flowing into the electric machine of the generator 9, but rather from the electric machine to the pedals to actively move the driver's leg. The power needed for this, can be drawn from the battery 8, see also Figure 1.

In the above embodiments, by switching of the different output limits, the physical system behaviour of the vehicle is influenced. Both the lower output limit and the upper output limit can be switched, independently and separately, between a zero and non-zero value. This switching of the output limits is not to be confused by on and off condition of the generator control. Allowing output currents in the range of <0 A (negative values) make the generator unit work as a generator (by braking/decelerating the system and opposing the drivers input torque) and allowing output currents in the range of >0A will make the generator unit work as a motor and in that case the generator will additionally accelerate the pedal-crank drive next to the drivers own input torque. This previous definition of <0A and >0A resulting in motoring/generating is only valid if the rotation direction is positive and therefore the angular speed is >0rpm. If the direction of rotation is reversed and the angular speed is therefore negative, the aforementioned current signs corresponding to the resulting motoring or regenerative behaviour of the system must be reversed accordingly.

The present invention has been described above with reference to a number of exemplary embodiments as shown in the drawings. Modifications and alternative implementations of some parts or elements are possible as long as they are included in the scope of protection as defined in the appended claims. It should be noted that the above-mentioned embodiments illustrate rather than limit the invention, and that those skilled in the art will be able to design many alternative embodiments within the scope of protection as defined in the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage.

## Claims

1. A vehicle (1), such as a bicycle or tricycle, comprising at least two wheels (3,4) and a hybrid drive system (20) for driving at least one of the wheels, wherein the hybrid drive system (20) comprises:
- at least one electrical generator (6) comprising a generator axle;
- a pedal-crank drive (11) coupled to the generator axle;
- at least one electrical drive motor (7) arranged to drive the at least one of the wheels;
- an energy storage device (8) arranged to store electric energy generated by the at least one electrical generator, and to supply energy to the at least one electrical drive motor (7);
- a control system (9) comprising:
- a generator current measurement unit (21) arranged to measure a generator current (I_{Gen}) of the at least one generator, which generator current is used to determine a driver input torque (T_{Driver}) applied to the pedal-crank drive (11) by a driver;
- a generator speed measurement unit (22) arranged to measure a generator angular speed (n_{Gen}) and/or a generator angle;
- a generator control unit (29) arranged to control the at least one electrical generator (6) depending on a target current value (I_{Gen_target}) for the at least one electrical generator (6);
- a generator target current calculator (24) arranged to calculate the target current value (I_{Gen_target}), wherein the target current value (I_{Gen_target}) is limited between two output limits being a lower output limit and an upper output limit, and
wherein the control system (9) is arranged to switch at least one of the two output limits between a zero-value and a non-zero value so as to allow the at least one electric generator to generate both driving and regenerative torque if the driver input torque (T_{Driver}) satisfies a first condition, and to allow the at least one electric generator to generate only regenerative torque if the driver input torque (T_{Driver}) satisfies a second condition.

2. The vehicle according to claim 1, wherein the control system (9) is arranged to switch the upper output limit from zero to a positive value if the driver input torque (T_{Driver}) satisfies the first condition, and to switch the upper output limit from the positive value back to zero if the driver input torque (T_{Driver}) satisfies the second condition.

3. The vehicle according to claim 1 or 2, wherein the first condition is satisfied if the driver input torque (T_{Driver}) exceeds an upper torque threshold (T_{minOnelegUpper}).

4. The vehicle according to any one of the preceding claims, wherein the second condition is satisfied by the input driver torque (T_{Driver}) if it drops below a lower torque threshold (T_{minOnelegLower}) and stays below the lower torque threshold (T_{minOnelegLower}) for at least a predefined time duration.

5. The vehicle according to claim 4, wherein the predefined time duration is a predefined percentage of the time that one pedal-crank drive revolution would take at the measured generator angular speed (n_{Gen}).

6. The vehicle according to claim 5, wherein the predefined percentage is in a range of 50% - 80%, and preferably in a range of 55% - 65%, and more preferably equal to 60%.

7. The vehicle according to any one of the preceding claims, wherein the second condition is satisfied by the input driver torque (T_{Driver}) if it drops below a lower torque threshold (T_{minOnelegLower}) and stays below the lower torque threshold (T_{minOnelegLower}) for a predefined number of angular degrees of the pedal-crank drive.

8. The vehicle according to claim 7, wherein the predefined number of angular degrees lies in a range of 180° - 270°, and is preferably equal to 240°.

9. The vehicle according to any one of the preceding claims, wherein the control system (9) is arranged to switch the at least one of the output limits only after the first condition and/or second condition is met for at least a waiting time, the waiting time having a value in a range of 1 ms - 1000 ms, and preferably in a range of 1 ms - 100 ms.

10. The vehicle according to any one of the preceding claims, wherein the generator target current calculator (24) comprises a PI(D) controller (40) arranged to calculate the target current value (I_{Gen_target}), and wherein the PI(D) controller (40) is arranged to switch the at least one of the output limits.

11. The vehicle according to any one of the preceding claims, wherein the generator target current calculator (24) is arranged to receive instructions from a user interface which instructions allow the switching of the at least one of the output limits.

12. The vehicle according to any one of the preceding claims, wherein the control system (9) is arranged to set the at least one of the output limits to a value which is a predefined percentage of the maximum current of the generator (9), for example to 10% of the maximum current of the generator.

13. The vehicle according to any one of the preceding claims, wherein the control system (9) comprises a motor speed measurement unit (23) for measuring a motor speed (n_{Mot}) of the at least one electrical drive motor (7), the control system (9) being arranged to control a speed of the at least one electric generator (6) wherein a target speed value for the generator (n_{Gen_target}) depends on the motor speed (n_{Mot}).

14. A method of controlling a vehicle according to any of the preceding claims, wherein the method comprises:
- measuring a generator current (I_{Gen}) of the at least one generator, which generator current is used to determine a driver input torque (T_{Driver}) applied to the pedal-crank drive (11) by a driver;
- measuring a generator angular speed (n_{Gen}) and/or a generator angle;
- calculating a target current value (I_{Gen_target}) for the at least one electrical generator (6);
- limiting the target current value (I_{Gen_target}) between two output limits being a lower output limit and an upper output limit,
- controlling the at least one electrical generator (6) depending on the target current value (I_{Gen_target}),
- switching at least one of the two output limits between a zero-value and a non-zero value so as to allow the at least one electric generator to generate both driving and regenerative torque if the driver input torque (T_{Driver}) satisfies a first condition, and to allow the at least one electric generator to generate only regenerative torque if the driver input torque (T_{Driver}) satisfies a second condition.

15. A computer program product comprising instructions configured to, when loaded on a control system of a vehicle according to any one of the claims 1-13, perform the method of claim 14.
